# EUROPÄISCHE PATENTSCHRIFT

(11) **EP 2 811 239 B1**
(45) Veröffentlichungstag und Bekanntmachung des Hinweises auf die Patenterteilung: **01.02.2017**
(21) Anmeldenummer: 13170995.8
(22) Anmeldetag: 07.06.2013
(51) Int. Cl.: F24J 2/52, E06B 3/54, H01L 31/042

(54) **Distanzhalter**
Spacing element
Entretoise

(43) Veröffentlichungstag der Anmeldung: 10.12.2014
(73) Patentinhaber: Ernst Schweizer AG, Metallbau, 8908 Hedingen (CH)
(72) Erfinder: Bezzola, Flavio, 8004 Zürich (CH); Contal, Fanny, 8005 Zürich (CH); Weiss, Hanspeter, 5622 Waltenschwil (CH); Tschan, Thomas, 6330 Cham (CH)
(74) Vertreter: Frischknecht, Harry Ralph

(56) Entgegenhaltungen:
- EP-A1- 1 039 549
- EP-A2- 1 418 627
- EP-A2- 2 503 600
- JP-A- 2006 100 392
- US-A1- 2010 263 724

## Beschreibung

### TECHNISCHES GEBIET

Die vorliegende Erfindung betrifft einen Distanzhalter zur Bereitstellung eines definierten Minimalabstandes zwischen einem flächigen Element, wie einem Photovoltaiklaminat oder einem Solarglas oder einem Fensterglas, und Profilelementen mit einer Nut, in welcher das flächige Element gelagert ist, nach dem Oberbegriff von Anspruch 1, sowie einem Modul mit einem Distanzhalter nach dem Anspruch 13.

### STAND DER TECHNIK

Photovoltaikmodule zur Gewinnung von elektrischer Energie oder thermische Solarmodule zur Gewinnung von thermischer Energie weisen bezüglich ihrer mechanischen Struktur meist einen Rahmen aus Metall auf, welcher das Solarmodul seitlich mindestens teilweise umlaufend begrenzt.

Bei Photovoltaikmodulen wird im Rahmen ein Photovoltaiklaminat, welches aus mindestens einer Glasschicht besteht, auf welcher rückseitig die Solarzellen angeordnet sind, in eine umlaufende Nut in den Rahmen eingesetzt. Es sind auch Photovoltaikmodule bekannt, bei welchen die Solarzellen zwischen zwei parallelen Solargläsern eingeschlossen sind.

Bei thermischen Solarmodulen ist der Rahmen meist etwas höher ausgebildet, so dass Raum für thermische Absorber geschaffen wird, welche durch den Rahmen umgeben sind. Nach vorne hin, also zur Sonne orientiert, ist durch den Rahmen ein Solarglas gehalten, welches die Absorber vor Witterungseinflüssen schützt.

Sowohl das Photovoltaiklaminat als auch das Solarglas stellen flächige Elemente aus Glas bereit, welche im Rahmen gelagert werden. Diese flächigen Elemente werden meist über eine Dicht- und Klebemasse, wie einem Silikonkleber, oder Klebestreifen (Tape) oder EPDM-Dichtungen im Rahmen gehalten. Gerade bei grösseren Solarmodulen besteht in der Montage mit der Dicht- und Klebemasse das Problem, dass der Abstand zwischen dem Rahmen und dem flächigen Element meist unbestimmt ist. Hierdurch kann es abschnittsweise vorkommen, dass keine oder zu wenig Dicht- und Klebemasse zwischen dem flächigen Element und dem Rahmen vorhanden ist. Solche Stellen sind aufgrund der unterschiedlichen Wärmeausdehnung des Rahmens und des flächigen Elementes kritisch, weil hier die Dichtfuge aufreissen kann, wodurch es im späteren zu einem Flüssigkeitsdurchtritt kommen kann. Zudem kann es auch bei mechanischen Belastungen auf das flächige Element, welche beispielsweise durch Windsog oder Schnee entstehen, zu einem derartigen Versagen oder Aufreissen kommen.

EP-A-2503600 offenbart einen Distanzhalter gemäß dem Oberbegriff des Anspruchs 1.

### DARSTELLUNG DER ERFINDUNG

Der vorliegenden Erfindung liegt die Aufgabe zugrunde, eine technische Lehre anzugeben, welche die Nachteile des Standes der Technik überwindet. Insbesondere soll bei Solarmodulen ein genügend breite bzw. dicke Dicht- und Klebefuge, insbesondere eine Silikonfuge, zwischen einem flächigen Element, wie einem Photovoltaiklaminat oder einem Solarglas, und Profilelementen, in welchen das flächige Element gelagert ist, bereitstellbar sein. Insbesondere soll die Dicht- und Klebefuge reproduzierbar hergestellt werden.

Diese Aufgabe löst ein Distanzhalter nach Anspruch 1 und ein Modul nach Anspruch 13.

Ein Distanzhalter nach Anspruch 1 dient der Bereitstellung eines definierten Minimalabstandes zwischen einem flächigen Element, wie einem Photovoltaiklaminat oder einem Solarglas oder einem Fensterglas, und Profilelementen mit einer Nut, in welcher das flächige Element gelagert ist. Der Distanzhalter weist einen Basisabschnitt und einen sich dem Basisabschnitt angeformten Distanzhalteabschnitt auf, der vom Basisabschnitt winklig absteht, wobei mindestens der Distanzhalteabschnitt zwischen dem flächigen Element und dem Profilelement, insbesondere der Nut, zu liegen kommt.

Mit dem Distanzhalteabschnitt wird eine definierte Distanz zwischen dem flächigen Element und dem Profilelement bzw. der Nut bzw. der Seitenwände der Nut bereitgestellt. Hierdurch kann eine definierte Dicke bzw. Breite der Dicht- und Klebemasse gewährleistet werden. Durch den Distanzhalteabschnitt lässt sich weiter die Dicke bzw. Breite der Dicht- und Klebemasse genau auf ein Minimalmass dimensionieren.

Weiter umfasst der Distanzhalter weiter mindestens ein, vorzugsweise zwei, Zentrierabschnitte, welche(r) sich vom Basisabschnitt seitlich erstreckt. Die Zentrierabschnitte erstrecken sich in eine andere Richtung wie der Distanzhalteabschnitt.

Im eingebauten Zustand kommt der Distanzhalteabschnitt vorzugsweise auf die Oberfläche des flächigen Elementes zu liegen und definiert dabei einen Minimalabstand in Richtung der Normalen der Oberfläche des flächigen Elementes. Der Zentrierabschnitt kommt mit der Stirnfläche des flächigen Elementes in Kontakt und stellt einen Minimalabstand zwischen der Stirnfläche und dem Profilelement bereit.

Weiter kann der Zentrierabschnitt mit federnden Eigenschaften versehen sein, so dass über den Zentrierabschnitt das flächige Element in einem Rahmen aus den Profilelementen zentriert wird. Über den Zentrierabschnitt kann auch ein Minimalabstand zwischen Nut und Stirnfläche des flächigen Elementes bereitgestellt werden.

Sowohl der Zentrierabschnitt als auch der Distanzhalteabschnitt können der Kompensation von Fertigungstoleranzen dienen. Weiter lassen sich Fertigungsabläufe von Modulen verbessern. Beispielhaft sei hier die Aushärtung der Klebe- und Dichtmasse im senkrechten Zustand genannt.

Vorzugsweise weist der Zentrierabschnitt gegenüber der Verbindungsstelle, mit welchem der Zentrierabschnitt am Basisabschnitt angeformt ist, ein freies Ende auf, wobei der Zentrierabschnitt zwischen der Verbindungsstelle und dem freien Ende über einen Bogen geschwungen ausgebildet ist. Hierdurch wirkt der bogenförmige Zentrierabschnitt als Blattfeder, welche einerseits mit dem freien Ende und andererseits mit dem Basisabschnitt am Profilelement anliegt. Durch eine Veränderung des Bogenradius bei Einwirkung von Kräften wirkt der bogenförmige Zentrierabschnitt als zweite bzw. weitere Feder.

Vorzugsweise liegt das freie Ende des Zentrierabschnittes bezüglich einer Richtung rechtwinklig zur Rückfläche des Basisabschnittes beabstandet zum Basisabschnitt. Hierdurch wird dem Zentrierabschnitt eine doppelte Federeigenschaft verliehen. Der Zentrierabschnitt federt als freie Blattfeder bis das freie Ende in Kontakt mit dem Profilelement kommt. Weiter federt dann der Bogen wie oben beschrieben. Hierdurch lässt sich eine verbesserte Zentrierung des flächigen Elementes bezüglich der Profilelemente erreichen.

Vorzugsweise weist der Distanzhalteabschnitt zwei winklig zueinander stehende Schenkel mit jeweils einer ersten Kante und einer zweiten Kante auf, wobei die Schenkel über die erste Kante miteinander in Verbindung stehen. Die Schenkel sind relativ zueinander elastisch verformbar. Durch diese Ausbildung wird dem Distanzhalteabschnitt ebenfalls eine federnde Eigenschaft verliehen.

Besonders bevorzugt wird zwischen den beiden Schenkeln ein Kanal gebildet, durch welchen eine Dicht- und Klebemassehindurchtreten kann. Hierdurch kann die Dichtigkeit weiter verbessert werden. Zudem wird der Distanzhalteabschnitt durch die Dicht- und Klebemasse in vorteilhafter Weise umgeben.

Vorzugsweise ist die erste Kante mit dem flächigen Element in Kontakt bringbar und die zweite Kante ist mit dem Profilelement in Kontakt bringbar.

In einer Weiterbildung ist der Distanzhalteabschnitt an seinem freien Ende gegenüber der Verbindungsstelle mit dem Basisabschnitt mit einer Anschrägung versehen ist. Die Anschrägung ist dabei so orientiert, dass diese als Einführhilfe für das flächige Element dient.

Vorzugsweise verläuft die Anschrägung bezüglich des Basisabschnittes so, dass die Dicke des Distanzhalteabschnittes vom freien Ende gesehen, von der zweiten Kante, welche mit dem Profilelement in Kontakt bringbar ist, mit abnehmendem Abstand zum Basisabschnitt zunimmt.

In einer Weiterbildung weist der Distanzhalter weiter einen Klemmabschnitt auf, welcher gegenüber des Distanzhalteabschnittes am Basisabschnitt angeformt ist. Der Klemmabschnitt sorgt dabei für eine Klemmkraft auf den Distanzhalter im Profilelement.

Vorzugsweise ist die Steifigkeit, insbesondere bezüglich einer Biegeeinwirkung, des Klemmabschnittes grösser, als die Steifigkeit des Distanzhalteabschnittes. Hierdurch wird sichergestellt, dass sich der Distanzhalteabschnitt und nicht zwingend der Klemmabschnitt verformt, wodurch erreicht wird, dass der Distanzhalteabschnitt sicher und im Wesentlichen über seine gesamte Kontaktfläche am Profilelement anliegt.

Besonders bevorzugt ist der Klemmabschnitt bezüglich einer Länge rechtwinklig zur Vorderfläche des Basisabschnittes kürzer ausgebildet als der Distanzhalteabschnitt. Der Klemmabschnitt ist vorzugsweise derart ausgebildet, dass dieser nicht in Kontakt mit dem flächigen Element kommt. In einigen Ausführungen kann es je nach Ausbildung des flächigen Elementes im Bereich der Stirnfläche zu einem Kontakt kommen.

Vorzugsweise erstrecken sich der Distanzhalteabschnitt und ggf. der Klemmabschnitt von einer Vorderfläche des Basisabschnittes, wobei mindestens im unverfomten Zustand der Distanzhalteabschnitt und ggf. der Klemmabschnitt mit einem Winkel von grösser als 90° zur Vorderfläche verlaufen. Sowohl Distanzhalteabschnitt als auch der Klemmabschnitt sind federnd ausgebildet und werden beim Einsetzen in das Profilelement leicht verformt.

Vorzugsweise sind der Basisabschnitt und ggf. der Zentrierabschnitt mit Durchbrüchen durchbrochen. Durch die Durchbrüche kann die Dicht- und Klebemasse durch den Basisabschnitt und ggf. den Zentrierabschnitt hindurchtreten.

In einer besonders bevorzugten Ausführungsform besteht Distanzhalter aus dem Basisabschnitt, dem Distanzhalteabschnitt, zwei Zentrierabschnitten und vorzugsweise dem Klemmabschnitt.

Ein Modul, insbesondere ein Photovoltaikmodul oder ein thermisches Solarmodul oder ein Fenstermodul, umfasst ein flächiges Element und mindestens ein Profilelement, welches das flächige Element seitlich mindestens auf einer Seite umgibt, sowie Distanzhalter nach obiger Beschreibung. Das Profilelement umfasst mindestens eine Nut, in welche das flächige Element mit Randbereichen einragt und im Profilelement gelagert ist. Zwischen Profilelement und flächigem Element, insbesondere in der besagten Nut, ist eine Klebe- und Dichtfuge, insbesondere eine Silikonfuge, vorhanden. In der Nut sind in vorzugsweise regelmässigen Abständen Distanzhalter nach der obigen Beschreibung angeordnet, welche mit mindestens dem Distanzhalteabschnitt eine Minimaldistanz zwischen Nut und dem flächigen Element halten. Die Minimaldistanz definiert die Dimension, beispielsweise die Dicke der Klebe- und Dichtfuge zwischen dem Profilelement und dem flächigen Element im Bereich des Distanzhalteabschnittes.

Vorzugsweise liegt der Distanzhalter mit der Rückfläche des Basisabschnittes an einer Grundfläche der Nut an und der Distanzhalteabschnitt liegt an derjenigen Seitenfläche der Nut an, welche hauptsächlich mit der Klebe- und Dichtfuge in Kontakt kommt, wobei der Distanzhalteabschnitt mit der Seitenfläche und im Wesentlichen mit der zum Distanzhalteabschnitt gerichteten Oberfläche des flächigen Elementes in Kontakt steht. Hierdurch wird ein definierter Minimalspalt zwischen der Oberfläche des flächigen Elementes und der Seitenfläche des Profilelementes bereitgestellt.

Bei Vorhandensein des Klemmabschnittes liegt dieser an der anderen Seitenfläche an. Der Basisabschnitt und ggf. der bzw. die Zentrierabschnitt(e) sind gegen die Stirnflächen des flächigen Elementes gerichtet und stehen mit den Stirnflächen des flächigen Elementes in Kontakt. Über die Stirnflächen wird das flächige Element innerhalb der Profilelemente zentriert. Diese Zentrierung erfolgt in einer Richtung parallel zur Oberfläche oder Oberseite des flächigen Elementes.

Ein Verfahren nach Anspruch 17 zur Herstellung eines Moduls nach obiger Beschreibung ist dadurch gekennzeichnet, dass in einem ersten Schritt die besagten Distanzhalter in die Nut des Profilelementes eingelegt werden, dass in einem zweiten Schritt Dicht- und Klebemasse in die Nut eingefüllt wird, und dass in einem dritten Schritt das flächige Element in die Nut eingeschoben wird.

Ein alternatives Verfahren zur Herstellung eines Moduls nach obiger Beschreibung ist dadurch gekennzeichnet, dass in einem ersten Schritt Dicht- und Klebemasse in die Nut eingefüllt wird, dass in einem zweiten Schritt die besagten Distanzhalter in die Nut des Profilelementes eingelegt werden, und dass in einem dritten Schritt das flächige Element in die Nut eingeschoben wird.

Ein weiteres alternatives Verfahren zur Herstellung eines Moduls nach obiger Beschreibung ist dadurch gekennzeichnet, dass in einem ersten Schritt die besagten Distanzhalter in die Nut des Profilelementes eingelegt werden, dass in einem zweiten Schritt das flächige Element in die Nut eingeschoben wird, und dass in einem dritten Schritt Dicht- und Klebemasse in die Nut eingefüllt wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Distanzhalter für die Bereitstellung eines definierten Abstandes zwischen flächigen Element, wie einem Photovoltaiklaminat oder einem Solarglas, und Profilelementen, in welchen das flächige Element gelagert ist;
- Fig. 2: eine weitere perspektivische Ansicht des Distanzhalters nach Figur 1;
- Fig. 3: eine Seitenansicht des Distanzhalters nach Figur 1;
- Fig. 4: eine Draufsicht des Distanzhalters nach Figur 1;
- Fig. 5: eine Frontansicht des Distanzhalters nach Figur 1;
- Fig. 6 - 8: Ansichten des Distanzhalters nach den vorhergehenden Figuren im in einer Nut eingebauten Zustand;
- Fig. 9: eine schematische Schnittdarstellung eines Solarmoduls mit dem flächigen Element und dem Profil sowie dem Distanzhalter nach den vorhergehenden Figuren;
- Fig. 10: die schematische Schnittdarstellung nach Figur 9 mit eingezeichneter Silikonfuge;
- Fig. 11: eine Draufsicht auf ein Solarmodul mit Distanzhaltern nach den vorhergehenden Figuren; und
- Fig. 11a: eine Ansicht des Details A der Figur 11.

### BESCHREIBUNG BEVORZUGTER AUSFÜHRUNGSFORMEN

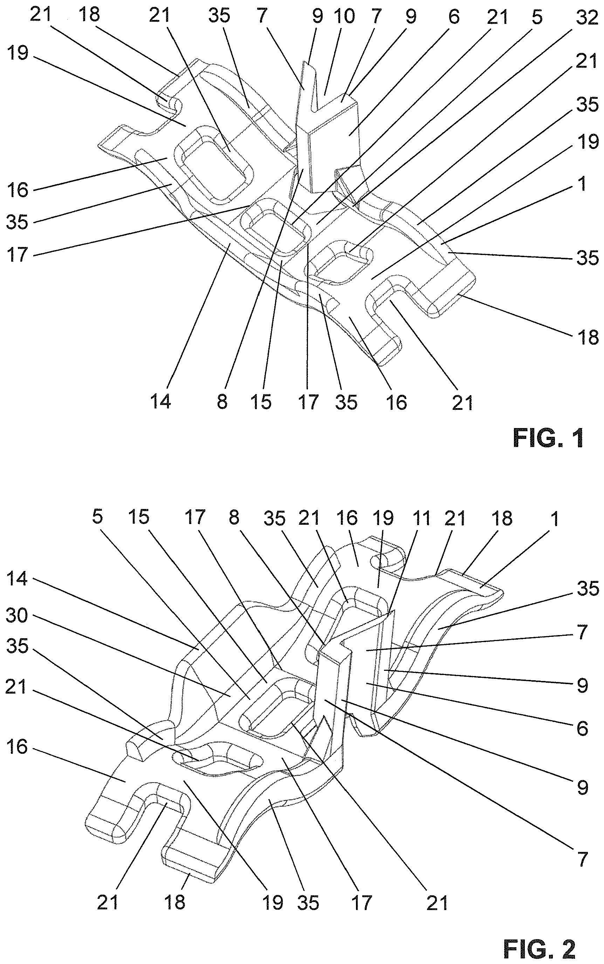

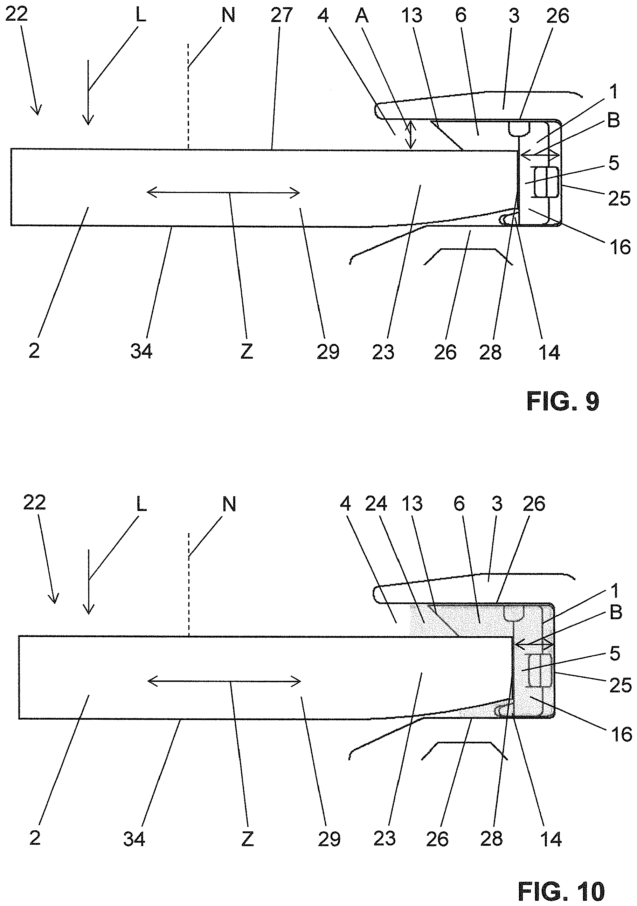

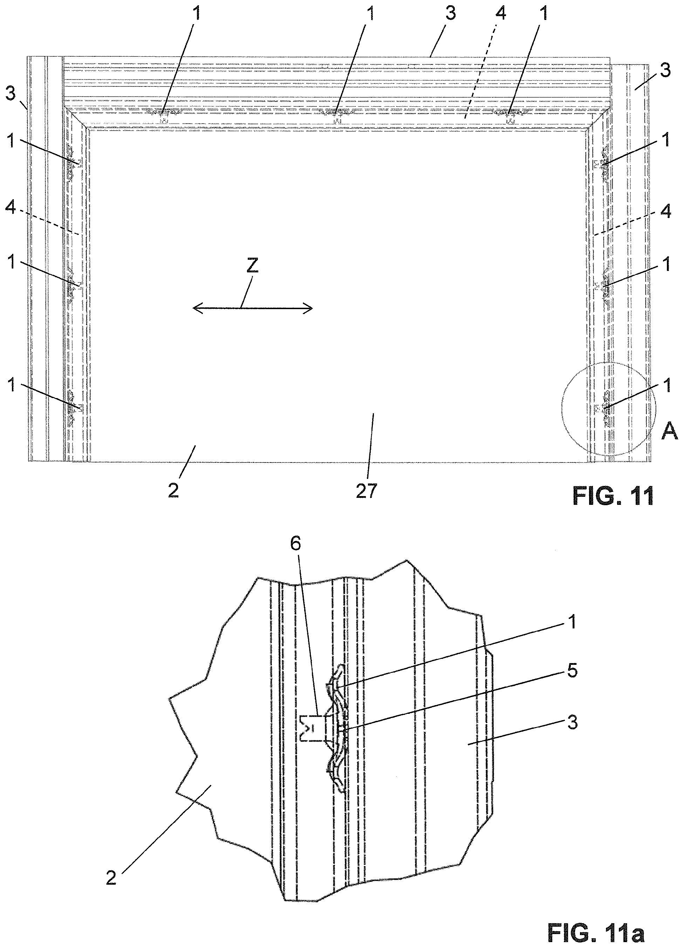

In den Figuren 1 bis 5 wird eine Ausführungsform eines Distanzhalters 1 zur Bereitstellung eines definierten Minimalabstandes A zwischen einem flächigen Element 2 und Profilelementen 3 mit einer Nut 4, in welcher das flächige Element 2 gelagert ist, gezeigt. Das flächige Element 2 ist beispielsweise ein Photovoltaiklaminat oder ein Solarglas. Das flächige Element kann aber auch ein Fensterglas sein. Das flächige Element und dessen Einbau wird mit den Figuren 9 bis 11 detaillierter beschrieben.

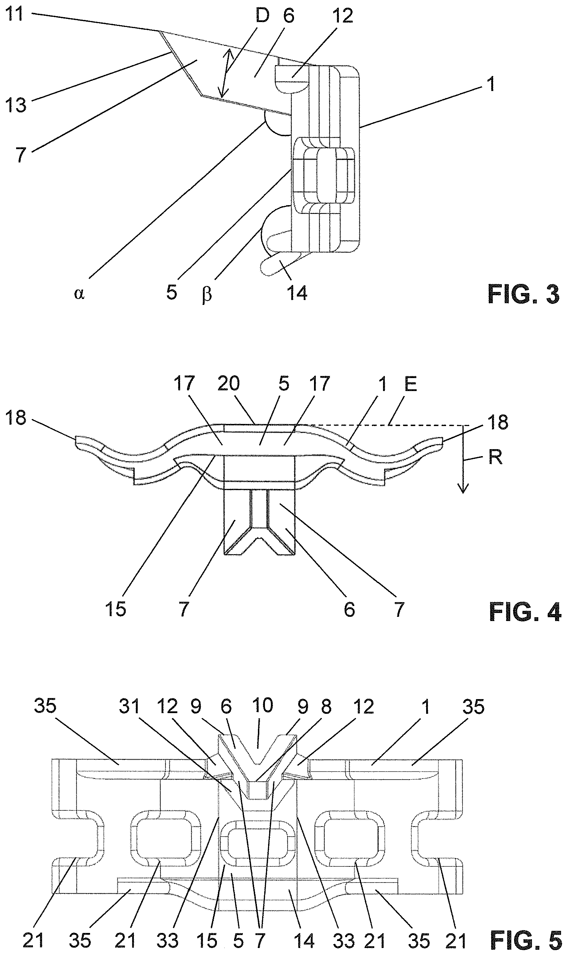

Der Distanzhalter 1 umfasst einen Basisabschnitt 5 und einen sich vom Basisabschnitt 5 erstreckenden Distanzhalteabschnitt 6. Der Distanzhalteabschnitt 6 ist am Basisabschnitt 5 angeformt. Der Distanzhalteabschnitt 6 ist derart zum Basisabschnitt 5 angeordnet, dass dieser winklig oder geneigt vom Basisabschnitt 5 absteht. Dieser Winkel wird in der Figur 3 mit den Bezugszeichen α angegeben.

Im eingebauten Zustand kommt der Distanzhalteabschnitt 6 zwischen dem Flächenelement 2 und dem Profilelement 3, insbesondere der Nut 4, zu liegen. Hierdurch wird ein definierter Minimalabstand A in der Dicke D des Distanzhalteabschnittes 6 zwischen dem flächigen Element 2 und dem Profilelement 3 bereitgestellt. Die Dicke D kann ein festes Mass oder wie im Zusammenhang mit den federnden Schenkel unten beschrieben ein variables Mass sein. Dieser Minimalabstand A definiert einen Spalt, welcher mit einer Klebe- und Dichtmasse, insbesondere einem Silikonkleber, befüllt werden kann. Der Distanzhalteabschnitt 6 sorgt somit über die Bereitstellung des Minimalabstandes für eine genügende Dicke der Dichtfuge, welche durch die Dicht- und Klebemasse bereitgestellt wird.

Der Distanzhalteabschnitt 6 erstreckt sich von einem Randbereich 32 des Basisabschnittes 5. Mit anderen Worten gesagt, ist der Distanzhalteabschnitt 6 an einer Seitenkante des Basisabschnittes 5 angeformt.

Der Distanzhalter 1 umfasst weiter mindestens ein, vorzugsweise zwei, Zentrierabschnitte 16. Die Zentrierabschnitte 16 erstrecken sich vom Basisabschnitt 5 seitlich weg. Die Zentrierabschnitte 16 erstrecken sich in eine andere Richtung als der Distanzhalteabschnitt 6. Der Distanzhalteabschnitt 6 ist oben am Basisabschnitt angeformt, während die Zentrierabschnitte 16 sich seitlich vom Basisabschnitt 5 erstrecken.

Die Zentrierabschnitte 16 sind vorzugsweise federnd ausgebildet. Die Zentrierabschnitte 16 haben im Wesentlichen die Funktion der Zentrierung des flächigen Elementes innerhalb der Profilelemente 3, insbesondere innerhalb eines Rahmens, welcher durch die Profilelemente 3 bereitgestellt wird. Die Zentrierung findet bevorzugt in einer Ebene parallel zur Oberfläche des flächigen Elementes 2 statt. Diese Funktion wird untenstehend weiter ausgeführt. Weiter stellen die Zentrierabschnitte 16 auch einen Abstand zwischen der Stirnfläche 28 des flächigen Elementes 2 und dem Profilelement 3 bereit, wobei die Klebe- und Dichtmasse auch diesen Abstand auffüllen kann.

Die Zentrierabschnitte 16 sorgen zudem für ein Minimalmass B zwischen der Nut 4 und dem flächigen Element 2, wodurch die minimale Breite der Dichtfuge sichergestellt wird.

Von der Figur 4 kann gut erkannt werden, dass der Zentrierabschnitt 16 gegenüber der Verbindungsstelle 17, mit welchem der Zentrierabschnitt 16 am Basisabschnitt 5 abgeformt ist, ein freies Ende 18 aufweist. Dieses freie Ende 18 liegt beabstandet zur Verbindungsstelle 17. Der Zentrierabschnitt 16 ist zwischen der Verbindungsstelle 17 und dem freien Ende 18 über einen Bogen 19 geschwungen ausgebildet. Der Bogen 19 erstreckt sich dabei konvex in Richtung des Distanzhalteabschnittes 6.

Das freie Ende 18 ist bezüglich einer Richtung R rechtwinklig zur Rückfläche 20 des Basisabschnitte 5 gesehen beabstandet zum Basisabschnitt 5 angeordnet. Das freie Ende 18 liegt im unbelasteten Zustand also beabstandet zu einer Ebene, welche durch die Rückfläche 20 aufgespannt wird. Diese Ebene trägt in der Figur 4 das Bezugszeichen E und verläuft rechtwinklig zur Blattebene. Dieser Abstand R hat den Vorteil, dass der Zentrierabschnitt 16 um die Verbindungsstelle 17 als Blattfeder wirkt und gegen die besagte Ebene E bewegbar ist. Weiter wirkt auch der bogenartig ausgebildete Zentrierabschnitt 16 als zusätzliche Feder, wenn das freie Ende 18 in der Ebene der Rückfläche 20, welche typischerweise eine Kontaktfläche am Profilelement 3 darstellt, in Kontakt kommt.

Bezüglich der relativen Anordnung zwischen den Zentrierabschnitten 16 und dem Distanzhalteabschnitt 6 kann bezüglich der Rückfläche 20 des Basisabschnittes 5 gesagt werden, dass sich der Distanzhalteabschnitt 6 im Wesentlichen rechtwinklig zu dieser Rückfläche 20 erstreckt und dass die Zentrierabschnitte 16 im Wesentlichen in Richtung dieser Rückfläche 20 verlaufen. Die Zentrierabschnitte 16 erstrecken sich dabei ebenfalls von einem Randbereich vom Basisabschnitt 5 von demselben weg. Dieser Randbereich trägt das Bezugszeichen 33.

In der vorliegenden Ausführungsform sind genau zwei Zentrierabschnitte 16 am Basisabschnitt 5 angeformt. Somit wird für eine ausgeglichene Kräfteverteilung auf den Basisabschnitt 5 und die Zentrierabschnitte 16 gesorgt. Die beiden Zentrierabschnitte 16 sind dabei identisch zueinander ausgebildet und erstrecken sich beidseitig vom Basisabschnitt 5 nach links und nach rechts. Mittig zwischen diesen beiden Zentrierabschnitten 16 ist der Distanzhalteabschnitt 6 am oberen Ende des Basisabschnittes 5 angeformt. Der Distanzhalteabschnitt 6 erstreckt sich dabei nicht oder im Wesentlichen nicht in den Bereich der Zentrierabschnitte 16. Folglich weist der Distanzhalteabschnitt 6 mit Blick in seiner Richtung auf den Basisabschnitt 5 eine geringere Breite auf als die Distanz zwischen den beiden freien Enden 18 der Zentrierabschnitte 16.

Der Distanzhalteabschnitt 6 weist hier zwei winklig zueinander stehende Schenkel 7 auf. Die Schenkel 7 weisen jeweils eine erste Kante 8 und eine zweite Kante 9 auf. Die Schenkel 7 stehen über die erste Kante 8 miteinander in Verbindung. Die beiden zweiten Kanten 9 der beiden Schenkel 7 sind jeweils beabstandet zueinander angeordnet. Die Schenkel 7 sind dabei relativ zueinander elastisch verformbar. Mit anderen Worten heisst dies, dass der Winkel zwischen den beiden Schenkel 7 elastisch veränderbar ist. Diese elastische Verformbarkeit weist den Vorteil auf, dass sich der Distanzhalteabschnitt 6 an die Gegebenheiten des flächigen Elementes 2 durch eine Veränderung seiner Dicke D anpassen kann. Bei grosser ansteigender Kraft werden die Schenkel 7 dabei so verformt, dass diese in einer gemeinsamen Ebene liegen. Folglich definiert in diesem Fall dann die Schenkeldicke den Minimalabstand A bzw. die Dicke D des Distanzhalteabschnittes 6.

Im unverformten Zustand wird zwischen den beiden Schenkeln 7 ein Kanal 10 gebildet. Durch diesen Kanal 10 kann eine Dicht- und Klebemasse hindurchtreten. Der Kanal 10 sorgt somit für eine effiziente Verteilung der Dicht- und Klebemasse im Bereich des Distanzhalteabschnittes 6.

Im eingebauten Zustand ist die erste Kante 8 mit dem flächigen Element 2 in Kontakt bringbar. Die zweite Kante 9 ist mit dem Profilelement 3 in Kontakt bringbar. Somit steht der Distanzhalteabschnitt 8 also mit einer Kontaktstelle mit dem flächigen Element 2 in Verbindung und mit zwei Kontaktstellen, nämlich den beiden zweiten Kanten 9, mit dem Profilelement 3.

An seinem freien Ende 11 gegenüber der Verbindungstelle 12 mit dem Basisabschnitt 5 weist der Distanzhalteabschnitt 6 eine Anschrägung 13 auf. Diese Anschrägung 13 kann in der Figur 3 besonders gut erkannt werden. Diese Anschrägung 13 hat den Vorteil, dass das Einschieben des flächigen Elementes 2 erleichtert wird. Die Anschrägung 13 ist also eine Einführhilfe.

Der Distanzhalter 1 weist in der vorliegenden Ausführungsform weiter einen Klemmabschnitt 14 auf. Der Klemmabschnitt 14 ist gegenüber des Distanzhalteabschnittes 6 am Basisabschnitt 5 und zwischen den Zentrierabschnitten 16 angeformt. Der Klemmabschnitt 14 ist also unterseitig am Basisabschnitt 5 angeformt. Teilweise erstreckt sich der Klemmabschnitt 14 in der vorliegenden Ausführungsform auch in Richtung der Zentrierabschnitte 16, wodurch deren Federwirkung verstärkt werden kann. Die Federwirkung der Zentrierabschnitte 16 kann noch weiter verstärkt werden, indem sich Teile des Distanzhalteabschnittes 16 ebenfalls in die Zentrierabschnitte 16 erstrecken. Diese Teile könne als Rippe bezeichnet werden und tragen das Bezugszeichen 35. Der Klemmabschnitt 14 erstreckt sich ebenfalls geneigt oder winklig zum Basisabschnitt 5. Der Winkel wird in der Figur 3 mit dem Bezugszeichen β dargestellt.

Der Klemmabschnitt 14 wiest eine Steifigkeit, insbesondere bezüglich einer Biegeeinwirkung um die Verbindungsstelle 30 zwischen Klemmabschnitt 14 und Basisabschnitt 5, auf, welche grösser ist als die Steifigkeit des Distanzhalteabschnittes 6 bei einer Biegeeinwirkung um die Verbindungsstelle 12 zwischen Basisabschnitt 5 und Distanzhalteabschnitt 6. Hierdurch wird sichergestellt, dass sich der Distanzhalteabschnitt 6 leichter bzw. bei geringerer Krafteinwirkung verformt wird und somit an der Seitenfläche 26 anliegt. Der Klemmabschnitt 14 stellt eine konstante Klemmkraft auf den Distanzhalter 1 bereit, sodass dieser während der Montage sicher in der Nut gehalten wird.

Weiter ist der Klemmabschnitt 14 bezüglich einer Länge rechtwinklig zur Vorderfläche 15 des Basisabschnittes 5 gesehen kürzer ausgebildet als der Distanzhalteabschnitt 6. Der Distanzhalteabschnitt 6 ist also länger als der Klemmabschnitt 14. Vorzugsweise ist der Klemmabschnitt 14 nicht direkt in Kontakt mit dem flächigen Element 2. Je nach Ausbildung des flächigen Elementes 2 im Bereich der Stirnfläche kann es aber bei einigen Ausführungen durchaus zu einem Kontakt kommen. Weiter kann der Distanzhalter 1 bezüglich Materialvolumen optimiert werden.

Von der Figur 3 kann weiter erkannt werden, dass sich der Distanzhalteabschnitt 6 und der Klemmabschnitt 14 von einer Vorderfläche 15 des Basisabschnittes 5 erstrecken. Mindestens im unverformten Zustand verlaufen sowohl der Distanzhalteabschnitt 6 als auch der Klemmabschnitt 14 mit einem Winkel α, β und grösser als 90° zur Vorderfläche 15. Im eingebauten Zustand verkleinern sich die Winkel α, β. Der Winkel α zwischen Distanzhalteabschnitt 6 und Vorderfläche 15 wird dabei meist auf 90° verformt, während der Winkel β zwischen Klemmabschnitt 14 und Vorderfläche 15 meist grösser als 90° ist.

Die Verformbarkeit des Distanzhalteabschnittes 6 kann durch dessen Anbindung über die Verbindungsstelle 12 an den Basisabschnitt 5 verbessert werden. In der vorliegenden Ausführungsform ist im Bereich des Basisabschnittes 5 eine Öffnung 31 vorgesehen, sodass die Verbindungsstelle 12 im Wesentlichen die Gestalt eines Torsionssteges aufweist, wobei über diesen Torsionssteg der Distanzhalteabschnitt 6 mit dem Basisabschnitt 5 in Verbindung steht. Der Torsionssteg kann in seiner Verlängerung so ausgebildet sein, dass sich dieser teilweise bis in die Zentrierabschnitte 16 erstreckt. Dies wird in der Figur 5, in welcher auch die Öffnung 31 gut zu erkennen ist, gezeigt. Dieser Torsionssteg bzw. die Verbindungsstelle 12 ist dabei für die oben beschriebene Steifigkeit bezüglich der Biegeeinwirkung massgeblich. Die Öffnung 31 hat zudem noch den Vorteil, dass die Dicht- und Klebemasse im Bereich der Öffnung 31 durch den Distanzhalter 1 hindurchtreten kann. Weiter erlaubt die Öffnung 31 auch die Formung eines einfachen Spritzgusswerkzeuges.

Weiter ist der Basisabschnitt 5 und die Zentrierabschnitte 16 mit Durchbrüchen 21 durchbrochen. Diese Durchbrüche 21 sorgen ebenfalls für einen Durchtritt der Dicht- und Klebemasse durch den Distanzhalter 1. Im Bereich der freien Enden 18 der Zentrierabschnitte 16 sind die Durchbrüche 21 einseitig offen ausgebildet, sodass der Zentrierabschnitt 16 im Bereich der freien Enden 18 im Wesentlichen aus zwei Schenkeln besteht. Hierdurch kann die Federeigenschaft des Zentrierabschnittes 16 weiter beeinflusst werden.

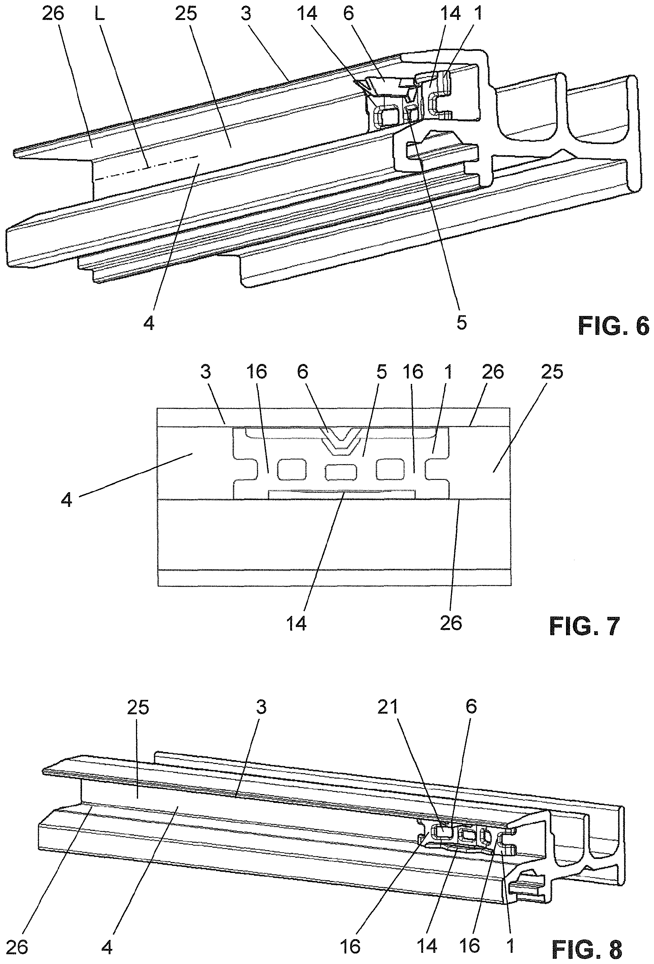

In den Figuren 6 bis 8 werden verschiedene Ansichten einer typischen Einbausituation des Distanzhalters 1 gezeigt. Der Distanzhalter 1 ist in einer Nut 4 eines Profilelementes 3 platziert. Die Nut 4 erstreckt sich entlang einer Längsachse L und weist eine Grundfläche 25 auf, von welcher sich zwei Seitenflächen 26 erstrecken. Grundfläche 25 und Seitenfläche 26 definieren dabei einen Innenraum der Nut 4.

Der Distanzhalter 1 liegt mit der Rückfläche 20 des Basisabschnittes 5 an der Grundfläche 25 der Nut 4 an. Der Distanzabschnitt 6 liegt dabei mit den beiden zweiten Kanten 9 an einer Seitenfläche 26 der Nut an. Somit wird also durch den Distanzabschnitt 6 ein Abstand zwischen der Seitenfläche 26 und dem flächigen Element 2, das in die Nut eingesetzt wird, geschaffen. Weiter kann in den Figuren 6 bis 8 erkannt werden, dass der Klemmabschnitt 14 an der gegenüberliegenden Seitenfläche 26, welche nicht mit dem Distanzabschnitt 6 in Kontakt ist, anliegt.

In den Figuren 9 bis 11 wird ein Modul 22 mit dem Distanzhalter 1 gezeigt. Das Modul 22 kann dabei ein Photovoltaikmodul, ein thermisches Solarmodul oder ein Fenstermodul sein. Das Modul 22 umfasst ein flächiges Element 2 und mindestens ein Profilelement 3, welches das flächige Element 2 seitlich auf mindestens einer Seite umgibt. Das Profilelement 3 umfasst, wie oben bereits erwähnt, eine Nut 4, in welcher das flächige Element 2 mit Randbereichen 23 einragt und im Profilelement 3 gelagert ist. Zwischen dem Profilelement 3 und dem flächigen Element 2, insbesondere in der besagten Nut, ist eine Klebe- und Dichtfuge 24 vorhanden. Die Klebe- und Dichtfuge 24 wird in der Figur 10 gezeigt und wird vorzugsweise durch einen Silikonkleber gefüllt. Die Klebe- und Dichtfuge 24 erstreckt sich hier zwischen der Nut 4 und den Randbereichen des flächigen Elementes 2, wobei die Fuge die Oberfläche bzw. Oberseite 27 und die Seitenfläche 28 des flächigen Elementes 2 kontaktiert. Auch kann sich die Fuge vollständig um den Randbereich des flächigen Elementes 2 erstrecken, wobei die Fuge dann auch mit dessen Unterseite 34 in Kontakt steht.

In der Nut 4 sind mehrere Distanzhalter 1 angeordnet. Über den Distanzhalteabschnitt 6 ist eine Minimaldistanz zwischen der Nut 4, hier der zweiten Fläche 26, und dem flächigen Element 2 bereitstellbar. Diese Minimaldistanz wird in der Figur 9 mit den Bezugszeichen A gezeigt. Der Distanzhalter 1 wird also derart in die Nut eingelegt, dass der Abstand A zwischen der Seitenfläche 26 und der Oberfläche 32 des flächigen Elementes 2 bereitgestellt wird, wodurch die minimale Dicke der Fuge 24 definiert wird.

Die Distanzhalter 1 sind dabei vorzugsweise in regelmässigen Abständen zueinander in der Nut 4 platziert. Der Abstand beträgt typischerweise 10 cm bis 100 cm zwischen zwei benachbart liegenden Distanzhaltern 1.

In den Figuren 9 und 10 kann auch weiter gut erkannt werden, dass der Klemmabschnitt 14 nicht in Kontakt mit dem flächigen Element stehen muss. Meist weist das flächige Element 2, insbesondere in der Gestalt eines Photovoltaikmoduls, Kantenbereiche auf, welche leicht gerundet ausgebildet sind. Mit anderen Worten gesagt ist der Distanzhalter 1 vorzugsweise derart ausgebildet, dass dieser das flächige Element 2 nicht vollständig umgibt, sondern im Wesentlichen mit dem Distanzhalteabschnitt 6 und den Zentrierabschnitten 16 mit dem flächigen Element 2 in Kontakt ist.

In den Figuren 9 und 10 kann weiter gut erkannt werden, dass, wie oben bereits erläutert, der Distanzhalter 1 mit der Rückfläche 20 des Basisabschnittes 5 an der Grundfläche 25 der Nut 4 anliegt. Der Distanzhalterabschnitt 6 steht also mit der Seitenfläche 26 der Nut 4 und mit der zum Distanzhalteabschnitt 6 gerichteten Oberfläche 27 des flächigen Elementes 2 in Kontakt. Mit dem Distanzhalteabschnitt 6 ist also eine Distanz zwischen der Nut 4 und der Oberfläche 27 des flächigen Elementes in Richtung der Flächennormale N der Oberfläche 27 bereitstellbar. Der Klemmabschnitt 14 liegt dabei, wie ebenfalls bereits erwähnt, an der anderen Seitenfläche 26 an.

Der Basisabschnitt 5 und der Zentrierabschnitt 16 sind gegen die Stirnflächen 28 des flächigen Elementes 2 gerichtet. Insbesondere die Zentrierabschnitte 16 stehen dabei mit den Stirnflächen 28 des flächigen Elementes 2 in Kontakt. Je nach Grad der Verformung der Zentrierabschnitte 16 kommt auch der Basisabschnitt 5 mit seiner Vorderfläche 15 mit den Stirnflächen 28 in Kontakt. Über die Zentrierabschnitte 16 wird das flächige Element in einem Profilrahmen zentriert. Die Zentrierung erfolgt dabei rechtwinklig zur Flächennormalen N. Diese Richtung wird in den Figuren 9 und 10 mit den Bezugszeichen Z dargestellt.

Zusammenfassend kann also gesagt werden, dass über den Distanzhalteabschnitt 6 ein Minimalabstand A in Richtung der Flächennormale N des flächigen Elementes bereitgestellt wird und über die Zentrierabschnitte 16 eine Zentrierung in Richtung Z des flächigen Elementes erfolgen kann. Das flächige Element 2 kann so mit einfachen Mitteln in einem Rahmen aus den Profilelementen 3 positioniert werden, wobei immer ein Minimalabstand durch den Distanzhalteabschnitt 6 und die Zentrierabschnitte 16 für die Bereitstellung der minimalen Dicke bzw. Breite der Dicht- und Klebefuge 24 bereitgestellt wird.

Das Modul umfasst je nach Ausbildung weiter eine Energieumwandlungseinheit 29, die bspw. Photovoltaikzellen oder thermische Absorber. Die Energieumwandlungseinheit 29 ist bezüglich der Lichteinfallrichtung L hinter dem flächigen Element angeordnet.

Nach einem Verfahren zur Herstellung eines Moduls 22 werden in einem ersten Schritt Distanzhalter 1 in die Nut 4 des Profilelementes 3 eingelegt, in einem zweiten Schritt wird Dicht- und Klebemasse in die Nut 4 eingefüllt und in einem dritten Schritt wird das flächige Element 2 in die Nut 4 eingeschoben. Nach einem alternativen Verfahren werden der erste und der zweite Schritt in der Reihenfolge vertauscht. Nach einem weiteren alternativen Verfahren werden in einem ersten Schritt Distanzhalter 1 in die Nut 4 des Profilelementes 3 eingelegt, in einem zweiten Schritt wird das flächige Element 2 in die Nut 4 eingeschoben und in einem dritten Schritt wird Dicht- und Klebemasse in die Nut 4 eingefüllt.

**BEZUGSZEICHENLISTE**

| | | | |
|---|---|---|---|
| 1 | Distanzhalter | 30 | Verbindungsstelle |
| 2 | flächiges Element | 31 | Öffnung |
| 3 | Profilelement | 32 | Randbereich |
| 4 | Nut | 33 | Randbereich |
| 5 | Basisabschnitt | 34 | Unterseite |
| 6 | Distanzhalteabschnitt | 35 | Rippe |
| 7 | Schenkel | A | Minimalabstand |
| 8 | erste Kante | B | Minimalabstand |
| 9 | zweite Kante | E | Ebene |
| 10 | Kanal | L | Lichteinfallsrichtung |
| 11 | freies Ende | N | Flächennormale |
| 12 | Verbindungsstelle | R | Richtung |
| 13 | Anschrägung | | |
| 14 | Klemmabschnitt | | |
| 15 | Vorderfläche | | |
| 16 | Zentrierabschnitte | | |
| 17 | Verbindungsstelle | | |
| 18 | freies Ende | | |
| 19 | Bogen | | |
| 20 | Rückfläche | | |
| 21 | Durchbrüche | | |
| 22 | Modul | | |
| 23 | Randbereiche | | |
| 24 | Klebe- und Dichtfuge | | |
| 25 | Grundfläche | | |
| 26 | Seitenfläche | | |
| 27 | Oberfläche bzw. Oberseite | | |
| 28 | Stirnfläche | | |
| 29 | Energieumwandlungseinheit | | |

## Patentansprüche

1. Distanzhalter (1) zur Bereitstellung eines definierten Minimalabstandes (A) zwischen einem flächigen Element (2), wie einem Photovoltaiklaminat oder einem Solarglas oder einem Fensterglas, und Profilelementen (3) mit einer Nut (4), in welcher das flächige Element (2) gelagert ist, wobei der Distanzhalter (1) einen Basisabschnitt (5) und einen sich dem Basisabschnitt (5) angeformter Distanzhalteabschnitt (6) aufweist, der vom Basisabschnitt (5) winklig absteht, wobei mindestens der Distanzhalteabschnitt (6) zwischen dem flächigen Element (2) und dem Profilelement (3), insbesondere der Nut (4), zu liegen kommt, **dadurch gekennzeichnet,**
**dass** der Distanzhalter (1) weiter mindestens ein Zentrierabschnitt (16) umfasst, welcher sich vom Basisabschnitt (5) seitlich erstreckt und welcher federnd ausgebildet ist, wobei der Zentrierabschnitt (16) im eingebauten Zustand federnd mit der Stirnfläche des flächigen Elementes in Kontakt bringbar ist und ein Minimalabstand zwischen der Stirnfläche und dem Profilelement bereitstellbar ist.

2. Distanzhalter (1) nach Anspruch 1, **dadurch gekennzeichnet, dass** der Distanzhalter (1) zwei gefedert ausgebildete Zentrierabschnitte (16) umfasst..

3. Distanzhalter (1) nach Anspruch 2, **dadurch gekennzeichnet, dass** der Zentrierabschnitt (16) gegenüber der Verbindungsstelle (17), mit welchem der Zentrierabschnitt (16) am Basisabschnitt (5) angeformt ist, ein freies Ende (18) aufweist, wobei der Zentrierabschnitt (16) zwischen der Verbindungsstelle (17) und dem freien Ende (18) über einen Bogen (19) geschwungen ausgebildet ist.

4. Distanzhalter (1) nach einem der Ansprüche 2 oder 3, **dadurch gekennzeichnet, dass** das freie Ende (18) bezüglich einer Richtung (R) rechtwinklig zur Rückfläche (20) des Basisabschnittes (5) beabstandet zum Basisabschnitt (5) liegt.

5. Distanzhalter (1) nach einem der vorhergehenden Ansprüche, **dadurch gekennzeichnet, dass** der Distanzhalteabschnitt (6) zwei winklig zueinander stehende Schenkel (7) mit jeweils einer ersten Kante (8) und einer zweiten Kante (9) aufweist, wobei die Schenkel (7) über die erste Kante (8) miteinander in Verbindung stehen, wobei die Schenkel (7) relativ zueinander elastisch verformbar sind.

6. Distanzhalter (1) nach Anspruch 5, **dadurch gekennzeichnet, dass** zwischen den beiden Schenkel (7) ein Kanal (10) gebildet wird, durch welchen eine Dicht- und Klebemasse hindurchtreten kann, und/oder dass die erste Kante (8) mit dem flächigen Element (2) in Kontakt bringbar ist und die zweite Kante (9) mit dem Profilelement (3) in Kontakt bringbar ist.

7. Distanzhalter (1) nach einem der vorhergehenden Ansprüche, **dadurch gekennzeichnet, dass** der Distanzhalteabschnitt (6) an seinem freien Ende (11) gegenüber der Verbindungsstelle (12) mit dem Basisabschnitt (5) mit einer Anschrägung (13) versehen ist.

8. Distanzhalter (1) nach Anspruch 7, **dadurch gekennzeichnet, dass** die Anschrägung (13) bezüglich des Basisabschnittes (5) so verläuft, dass die Dicke (D) des Distanzhalteabschnittes vom freien Ende (11) gesehen, von der zweiten Kante (9), welche mit dem Profilelement (3) in Kontakt bringbar ist, mit abnehmendem Abstand zum Basisabschnitt (5) zunimmt.

9. Distanzhalter (1) nach einem der vorhergehenden Ansprüche, **dadurch gekennzeichnet, dass** der Distanzhalter (1) weiter einen Klemmabschnitt (14) aufweist, welcher gegenüber des Distanzhalteabschnittes (6) am Basisabschnitt (5) angeformt ist.

10. Distanzhalter nach Anspruch 9, **dadurch gekennzeichnet, dass** die Steifigkeit, insbesondere bezüglich einer Biegeeinwirkung, des Klemmabschnittes (14) grösser ist, als die Steifigkeit des Distanzhalteabschnittes (6) und/oder dass der Klemmabschnitt (14) bezüglich einer Länge rechtwinklig zur Vorderfläche (15) des Basisabschnittes (5) kürzer ausgebildet ist als der Distanzhalteabschnitt (6).

11. Distanzhalter (1) nach einem der vorhergehenden Ansprüche, **dadurch gekennzeichnet, dass** sich der Distanzhalteabschnitt (6) und ggf. der Klemmabschnitt (14) von einer Vorderfläche (15) des Basisabschnittes (5) erstrecken, wobei mindestens im unverfomten Zustand der Distanzhalteabschnitt (6) und ggf. der Klemmabschnitt (14) mit einem Winkel (α, β) von grösser als 90° zur Vorderfläche (15) verlaufen.

12. Distanzhalter (1) nach einem der vorhergehenden Ansprüche, **dadurch gekennzeichnet, dass** der Basisabschnitt (5) und ggf. der Zentrierabschnitt (16) mit Durchbrüchen (21) durchbrochen sind.

13. Modul (22), insbesondere ein Photovoltaikmodul oder ein thermisches Solarmodul oder ein Fenstermodul, umfassend ein flächiges Element (2) und mindestens ein Profilelement (3), welches das flächige Element (2) seitlich auf mindestens einer Seite umgibt,
wobei das Profilelement (3) mindestens eine Nut (4) umfasst, in welche das flächige Element (2) mit Randbereichen (23) einragt und im Profilelement (3) gelagert ist,
wobei zwischen Profilelement (3) und flächigem Element (2), insbesondere in der besagten Nut (4), eine Klebe- und Dichtfuge (24) vorhanden ist, und
wobei in der Nut (4), in vorzugsweise regelmässigen Abständen, Distanzhalter (1) nach einem der vorhergehenden Ansprüche angeordnet sind, welche mit mindestens dem Distanzhalteabschnitt (6) eine Minimaldistanz (A) zwischen Nut (4) und dem flächigen Element (2) halten, wobei über die Minimaldistanz (A) die Dimension der Klebe- und Dichtfuge (24) im Bereich des Distanzhalteabschnittes (6) definierbar ist.

14. Modul nach Anspruch 13, **dadurch gekennzeichnet,**
**dass** der Distanzhalter (1) mit der Rückfläche (20) des Basisabschnittes (5) an einer Grundfläche (25) der Nut (4) anliegt und wobei der Distanzabschnitt (6) an derjenigen Seitenfläche (26) der Nut (4) anliegt, welche hauptsächlich mit der Klebe- und Dichtfuge (24) in Kontakt kommt, wobei der Distanzhalteabschnitt (6) mit der Seitenfläche (26) und im Wesentlichen mit der zum Distanzhalteabschnitt (6) gerichteten Oberfläche (27) des flächigen Elementes (2) in Kontakt steht, so dass eine relative Positionierung zwischen der besagten Oberfläche (27) und der Nut (4) bereitstellbar ist,
und/oder
**dass** der Klemmabschnitt (14) an der anderen Seitenfläche (26) der Nut (4) anliegt.

15. Modul nach Anspruch 13 oder 14, **dadurch gekennzeichnet, dass** der Basisabschnitt (5) und ggf. der bzw. die Zentrierabschnitt(e) (16) gegen die Stirnflächen (28) des flächigen Elementes (2) gerichtet sind und ggf. mit den Stirnflächen (28) des flächigen Elementes (2) in Kontakt stehen, so eine relative Positionierung zwischen der Stirnfläche (28) und der Nut (4) bereitstellbar ist.

16. Modul nach einem der Ansprüche 13 bis 15, **dadurch gekennzeichnet, dass** das Modul weiter eine Energieumwandlungseinheit (29), wie Photovoltaikzellen oder thermische Absorber umfasst, die bezüglich der Lichteinfallrichtung (L) hinter dem flächigen Element angeordnet sind.

17. Verfahren zur Herstellung eines Moduls (22) nach einem der Ansprüche 13 bis 16, **dadurch gekennzeichnet,**
**dass** in einem ersten Schritt Distanzhalter (1) nach einem der Ansprüche 1 bis 12 in die Nut (4) des Profilelementes (3) eingelegt werden, dass in einem zweiten Schritt Dicht- und Klebemasse in die Nut (4) eingefüllt wird, und dass in einem dritten Schritt das flächige Element (2) in die Nut (4) eingeschoben wird;
oder
**dass** in einem ersten Schritt Dicht- und Klebemasse in die Nut (4) eingefüllt wird, dass in einem zweiten Schritt Distanzhalter (1) nach einem der Ansprüche 1 bis 12 in die Nut (4) des Profilelementes (3) eingelegt werden, und dass in einem dritten Schritt das flächige Element (2) in die Nut (4) eingeschoben wird;
oder
**dass** in einem ersten Schritt Distanzhalter (1) nach einem der Ansprüche 1 bis 12 in die Nut (4) des Profilelementes (3) eingelegt werden, dass in einem zweiten Schritt das flächige Element (2) in die Nut (4) eingeschoben wird, und
**dass** in einem dritten Schritt Dicht- und Klebemasse in die Nut (4) eingefüllt wird.

## Claims

1. A spacing element (1) for providing a defined minimum distance (A) between a two-dimensional element (2), such as a photovoltaic laminate or a solar glass or a window glass, and profile elements (3) with a groove (4), in which the two-dimensional element (2) is mounted, wherein the spacing element (1) comprises a base portion (5) and a space holding portion (6) molded to the base portion (5), which angularly protrudes from the base portion (5), wherein at least the space holding portion (6) comes to lie between the two-dimensional element (2) and the profile element (3), in particular the groove (4), **characterized in that**
the spacing element (1) further comprises at least one centering portion (16), which extends laterally from the base portion (5) and which is of resilient design, wherein the centering portion (16) can be brought resiliently into contact with the front surface of the two-dimensional element in the installed state and a minimum distance between the front surface and the profile element can be provided.

2. The spacing element (1) according to claim 1, **characterized in that** the spacing element (1) comprises two centering portions (16) of spring-loaded design.

3. The spacing element (1) according to claim 2, **characterized in that** the centering portion (16) comprises a free end (18) opposite to the junction (17) by means of which junction the centering portion (16) is molded to the base portion (5), wherein the centering portion (16) is curved over an arc (19) between the junction (17) and the free end (18).

4. The spacing element (1) according to claim 2 or 3, **characterized in that** the free end (18) is arranged at a distance from the base portion (5) with respect to a direction (R) being perpendicular to the rear surface (20) of the base portion (5).

5. The spacing element (1) according to any one of the preceding claims, **characterized in that** the space holding portion (6) comprises two legs (7) being arranged at an angle to each other with in each case a first edge (8) and a second edge (9), wherein the legs (7) are in connection with each other via the first edge (8), wherein the legs (7) are elastically deformable relative to each other.

6. The spacing element (1) according to claim 5, **characterized in that** a channel (10) is formed between the two legs (7), through which a sealing and adhesive compound can pass through, and/or that the first edge (8) can be brought into contact with the two-dimensional element (2) and the second edge (9) can be brought into contact with the profile element (3).

7. The spacing element (1) according to any one of the preceding claims, **characterized in that** the space holding portion (6) on its free end (11) opposite to the junction (17) with the base portion (5) is provided with a bevel (13).

8. The spacing element (1) according to claim 7, **characterized in that** the bevel (13) extends relative to the base portion (5) such, that the thickness (D) of the space holding portion when viewed from the free end (11), from the second edge (9), which can be brought into contact with the profile element (3), increases with decreasing distance from the base portion (5).

9. The spacing element (1) according to any one of the preceding claims, **characterized in that** the spacing element (1) further comprises a clamping portion (14), which is molded to the base portion (5) opposite to the space holding portion (6).

10. The spacing element (1) according to claim 9, **characterized in that** the stiffness, in particular with respect to a bending effect, of the clamping portion (14) is larger than the stiffness of the space holding portion (6) and/or that the clamping portion (14) is designed shorter than the space holding portion (6) with respect to a length being perpendicular to the front surface (15) of the base portion (5).

11. The spacing element (1) according to any one of the preceding claims, **characterized in that** the space holding portion (6) and where appropriate the clamping portion (14) extend from the front surface (15) of the base portion (5), wherein at least in the non-deformed state the space holding portion (6) and where appropriate the clamping portion (14) extend at an angle (α, β) of greater than 90° with respect to the front surface (15).

12. The spacing element (1) according to any one of the preceding claims, **characterized in that** the base portion (5) and where appropriate the centering portion (16) are broken through with breakthroughs (21).

13. A module (22), in particular a photovoltaic module or a thermal solar module or a window module, comprising a two-dimensional element (2) and at least one profile element (3), which laterally surrounds the two-dimensional element (2) on at least one side,
wherein the profile element (3) comprises at least one groove (4), into which the two-dimensional element (2) protrudes with edge regions (23) and is mounted in the profile element (3),
wherein an adhesive and sealing joint (24) is present between the profile element (3) and the two-dimensional element (2), in particular in the said groove (4), and
wherein in the groove (4), preferably at regular intervals, spacing elements (1) according to any one of the preceding claims are arranged, which at least with the space holding portion (6) maintain a minimum distance (A) between groove (4) and the two-dimensional element (2), wherein the dimension of the adhesive and sealing joint (24) in the region of the space holding portion (6) is definable over the minimum distance (A).

14. The module according to claim 13, **characterized in that**
the spacing element (1) rests against a base surface (25) of the groove (4) with the rear surface (20) of the base portion (5) and wherein the space holding portion (6) rests against that lateral surface (26) of the groove (4), which mainly comes into contact with the adhesive and sealing joint (24), wherein the space holding portion (6) is in contact with the lateral surface (26) and substantially with the surface (27) of the two-dimensional element (2) facing towards the space holding portion (6), such that a relative positioning between the said surface (27) and the groove (4) can be provided,
and/or
that the clamping portion (14) rests against the other lateral surface (26) of the groove (4).

15. The module according to claim 13 or 14, **characterized in that** the base portion (5) and where appropriate the centering portion(s) (16) are facing towards the front surfaces (28) of the two-dimensional element (2) and where appropriate are in contact with the front surfaces (28) of the two-dimensional element (2), such that a relative positioning between the front surface (28) and the groove (4) can be provided.

16. The module according to any one of claims 13 to 15, **characterized in that** the module further comprises an energy conversion unit (29), such as photovoltaic cells or thermal absorbers, which are arranged behind the two-dimensional element (2) with respect to the direction of the incidence of light (L).

17. A method for producing a module (22) according to any one of claims 13 to 16, **characterized in that**
in a first step spacing elements (1) according to any one of claims 1 to 12 are inserted into the groove (4) of the profile element (3), that in a second step sealing and adhesive compound is filled into the groove (4), and that in a third step the two-dimensional element (2) is pushed into the groove (4);
or
that in a first step sealing and adhesive compound is filled into the groove (4), that in a second step spacing elements (1) according to any one of claims 1 to 12 are inserted into the groove (4) of the profile element (3), and that in a third step the two-dimensional element (2) is pushed into the groove (4);
or
that in a first step spacing elements (1) according to any one of claims 1 to 12 are inserted into the groove (4) of the profile element (3), that in a second step the two-dimensional element (2) is pushed into the groove (4), and that in a third step sealing and adhesive compound is filled into the groove (4).

## Revendications

1. Entretoise (1) pour fournir une distance minimale définie (A) entre un élément plat (2) tel qu'un stratifié photovoltaïque ou un verre solaire ou une vitre de fenêtre, et des éléments profilés (3) pourvus d'une rainure (4) dans laquelle est supporté l'élément plat (2), l'entretoise (1) présentant une portion de base (5) et une portion d'espacement (6) façonnée sur la portion de base (5), qui fait saillie sous forme angulaire depuis la portion de base (5), au moins la portion d'espacement (6) venant se placer entre l'élément plat (2) et l'élément profilé (3), en particulier la rainure (4),
**caractérisée en ce que**
l'entretoise (1) comprend en outre au moins une portion de centrage (16) qui s'étend latéralement depuis la portion de base (5) et qui est réalisée de manière élastique, la portion de centrage (16), dans l'état installé, pouvant être amenée en contact élastique avec là surface frontale de l'élément plat et une distance minimale entre la surface frontale et l'élément profilé pouvant être fournie.

2. Entretoise (1) selon la revendication 1,
**caractérisée en ce que** l'entretoise (1) comprend deux portions de centrage réalisées de manière élastique (16).

3. Entretoise (1) selon la revendication 2,
**caractérisée en ce que** la portion de centrage (16) à l'opposé du point de connexion (17), avec laquelle la portion de centrage (16) est façonnée sur la portion de base (5), présente une extrémité libre (18), la portion de centrage (16) étant réalisée sous forme arrondie par le biais d'une partie courbe (19) entre le point de connexion (17) et l'extrémité libre (18).

4. Entretoise (1) selon l'une quelconque des revendications 2 ou 3, **caractérisée en ce que** l'extrémité libre (18) est située à distance de la portion de base (5), par rapport à une direction (R) à angle droit par rapport à la surface arrière (20) de la portion de base (5).

5. Entretoise (1) selon l'une quelconque des revendications précédentes, **caractérisée en ce que** la portion d'espacement (6) présente deux branches coudées l'une par rapport à l'autre (7) ayant chacune une première arête (8) et une deuxième arête (9), les branches (7) étant en liaison l'une avec l'autre par le biais de la première arête (8), les branches (7) pouvant être déformées élastiquement l'une par rapport à l'autre.

6. Entretoise (1) selon la revendication 5,
**caractérisée en ce qu'**entre les deux branches (7) est formé un canal (10) à travers lequel peut passer une composition adhésive et d'étanchéité, et/ou **en ce que** la première arête (8) peut être amenée en contact avec l'élément plat (2) et la deuxième arête (9) peut être amenée en contact avec l'élément profilé (3).

7. Entretoise (1) selon l'une quelconque des revendications précédentes, **caractérisée en ce que** la portion d'espacement (6), au niveau de son extrémité libre (11) à l'opposé du point de connexion (12) à la portion de base (5), est pourvue d'un biseau (13).

8. Entretoise (1) selon la revendication 7,
**caractérisée en ce que** le biseau (13) s'étend par rapport à la portion de base (5) de telle sorte que l'épaisseur (D) de la portion d'espacement augmente, vu depuis l'extrémité libre (11), depuis la deuxième arête (9) qui peut être amenée en contact avec l'élément profilé (3), au fur et à mesure que la distance à la partie de base (5) diminue.

9. Entretoise (1) selon l'une quelconque des revendications précédentes, **caractérisée en ce que** l'entretoise (1) présente en outre une portion de serrage (14) qui est façonnée sur la portion de base (5) à l'opposé de la portion d'espacement (6).

10. Entretoise selon la revendication 9, **caractérisée en ce que** la rigidité, en particulier par rapport à un effet de flexion, de la portion de serrage (14) est supérieure à la rigidité de la portion d'espacement (6) et/ou **en ce que** la portion de serrage (14) est réalisée plus courte que la portion d'espacement (6) par rapport à une longueur à angle droit par rapport à la surface avant (15) de la portion de base (5).

11. Entretoise (1) selon l'une quelconque des revendications précédentes, **caractérisée en ce que** la portion d'espacement (6) et éventuellement la portion de serrage (14) s'étendent depuis une surface avant (15) de la portion de base (5), la portion d'espacement (6) et éventuellement la portion de serrage (14), au moins dans l'état non déformé, s'étendant avec un angle (α, β) supérieur à 90° par rapport à la surface avant (15).

12. Entretoise (1) selon l'une quelconque des revendications précédentes, **caractérisée en ce que** la portion de base (5) et éventuellement la portion de centrage (16) sont interrompues par des orifices (21).

13. Module (22), en particulier module photovoltaïque ou module solaire thermique ou module de fenêtre, comprenant un élément plat (2) et au moins un élément profilé (3) qui entoure l'élément plat (2) latéralement sur au moins un côté,
l'élément profilé (3) comprenant au moins une rainure (4) dans laquelle l'élément plat (2) pénètre avec des régions de bord (23) et est supporté dans l'élément profilé (3),
un joint d'adhésion et d'étanchéité (24) étant prévu entre l'élément profilé (3) et l'élément plat (2), en particulier dans ladite rainure (4),
et
des entretoises (1) selon l'une quelconque des revendications précédentes étant disposées dans la rainure (4), de préférence à intervalles réguliers, lesquelles maintiennent une distance minimale (A) entre la rainure (4) et l'élément plat (2) par le biais d'au moins la portion d'espacement (6), la dimension du joint d'adhésion et d'étanchéité (24) dans la région de la portion d'espacement (6) pouvant être définie par le biais de la distance minimale (A).

14. Module selon la revendication 13, **caractérisé en ce que**
l'entretoise (1) s'applique avec la surface arrière (20) de la partie de base (5) contre une surface de base (25) de la rainure (4) et la portion d'espacement (6) s'applique au niveau de la surface latérale (26) de la rainure (4) qui vient principalement en contact avec le joint d'adhésion et d'étanchéité (24), la portion d'espacement (6) étant en contact avec la surface latérale (26) et essentiellement avec la surface (27) de l'élément plat (2) orientée vers la portion d'espacement (6), de telle sorte qu'un positionnement relatif entre ladite surface (27) et la rainure (4) puisse être obtenu,
et/ou
**en ce que** la portion de serrage (14) s'applique contre l'autre surface latérale (26) de la rainure (4).

15. Module selon la revendication 13 ou 14,
**caractérisé en ce que** la portion de base (5) et éventuellement la ou les portions de centrage (16) sont orientées vers les surfaces frontales (28) de l'élément plat (2) et sont éventuellement en contact avec les surfaces frontales (28) de l'élément plat (2), de telle sorte qu'un positionnement relatif entre la surface frontale (28) et la rainure (4) puisse être obtenu.

16. Module selon l'une quelconque des revendications 13 à 15, **caractérisé en ce que** le module comprend en outre une unité de conversion d'énergie (29), telle que des piles photovoltaïques ou des absorbeurs thermiques, qui sont disposés par rapport à la direction d'incidence de la lumière (L) derrière l'élément plat.

17. Procédé de fabrication d'un module (22) selon l'une quelconque des revendications 13 à 16,
**caractérisé en ce que**
dans une première étape, des entretoises (1) selon l'une quelconque des revendications 1 à 12 sont introduites dans la rainure (4) de l'élément profilé (3), **en ce que** dans une deuxième étape, une composition adhésive et d'étanchéité est introduite dans la rainure (4) et **en ce que** dans une troisième étape, l'élément plat (2) est enfoncé dans la rainure (4) ; ou
dans une première étape, la composition adhésive d'étanchéité est introduite dans la rainure (4), **en ce que** dans une deuxième étape, des entretoises (1) selon l'une quelconque des revendications 1 à 12 sont introduites dans la rainure (4) de l'élément profilé (3), et **en ce que** dans une troisième étape, l'élément plat (2) est enfoncé
dans la rainure (4) ; ou
dans une première étape, des entretoises (1) selon l'une quelconque des revendications 1 à 12 sont introduites dans la rainure (4) de l'élément profilé (3), **en ce que** dans une deuxième étape, l'élément plat (2) est enfoncé dans la rainure (4), et **en ce que** dans une troisième étape, la composition adhésive d'étanchéité est introduite
dans la rainure (4).
